(19) Europäisches Patentamt

European Patent Office

Office européen des brevets

(11) **EP 2 532 083 B1**

(12) **EUROPEAN PATENT SPECIFICATION**

(45) Date of publication and mention
of the grant of the patent:
**05.02.2020 Bulletin 2020/06**

(51) Int Cl.:
**H02M 3/28** (2006.01)          **H02M 3/335** (2006.01)

(21) Application number: **10860179.0**

(22) Date of filing: **03.12.2010**

(86) International application number:
**PCT/CN2010/079419**

(87) International publication number:
**WO 2012/071735 (07.06.2012 Gazette 2012/23)**

(54) **POWER CONVERTER**

STROMWANDLER

CONVERTISSEUR ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.12.2012 Bulletin 2012/50**

(73) Proprietor: **Huawei Technologies Co., Ltd.
Longgang District
Shenzhen, Guangdong 518129 (CN)**

(72) Inventors:
• **PALMGREN, Michael**
**S-117 63 Stockholm (SE)**
• **TORRICO BASCOPE, Grover Victor**
**S-164 72 Kista (SE)**
• **RODULFO, Philip**
**ST.Veit a.d.Glan 9300 (AU)**

(74) Representative: **Pfenning, Meinig & Partner mbB
Patent- und Rechtsanwälte
Theresienhöhe 11a
80339 München (DE)**

(56) References cited:
EP-A2- 1 137 157          EP-A2- 1 209 804
CN-A- 101 022 244          CN-Y- 201 015 031
CN-Y- 201 118 530          JP-A- 2007 295 709
US-B1- 6 882 548

• YIM-SHU LEE ET AL: "Adding Active Clamping
and Soft Switching to Boost-Flyback
Single-Stage Isolated Power-Factor-Corrected
Power Supplies", IEEE TRANSACTIONS ON
POWER ELECTRONICS, IEEE SERVICE CENTER,
PISCATAWAY, NJ, US, vol. 12, no. 6, 1 November
1997 (1997-11-01), XP011043115, ISSN:
0885-8993
• LON-KOU CHANG ET AL: "An integrated
single-stage AC/DC converter with ZVS
active-clamping for universal line applications",
20 June 2004 (2004-06-20), POWER
ELECTRONICS SPECIALISTS CONFERENCE,
2004. PESC 04. 2004 IEEE 35TH ANNUAL,
AACHEN, GERMANY 20-25 JUNE 2004,
PISCATAWAY, NJ, USA,IEEE, US, PAGE(S) 759 -
764VOL.1, XP010738081, ISBN:
978-0-7803-8399-9 * page 760; figure 2 * * page
762 *
• PICKERT V ET AL: "Three-phase soft-switching
voltage sourceconverters formotor drives. Part
1: Overview and analysis", 10 March 1999
(1999-03-10), IEE PROCEEDINGS: ELECTRIC
POWER APPLICATIONS, INSTITUTION OF
ELECTRICAL ENGINEERS, GB, PAGE(S) 147 -
154, XP006013359, ISSN: 1350-2352 * figure 3a *

**Description**

**Technical Field**

The present invention relates to a power converter, or more particularly to a power converter according to the preamble of claim 1. Furthermore, the invention also relates to a method, a system, a computer program and a computer program product.

**Background of the Invention**

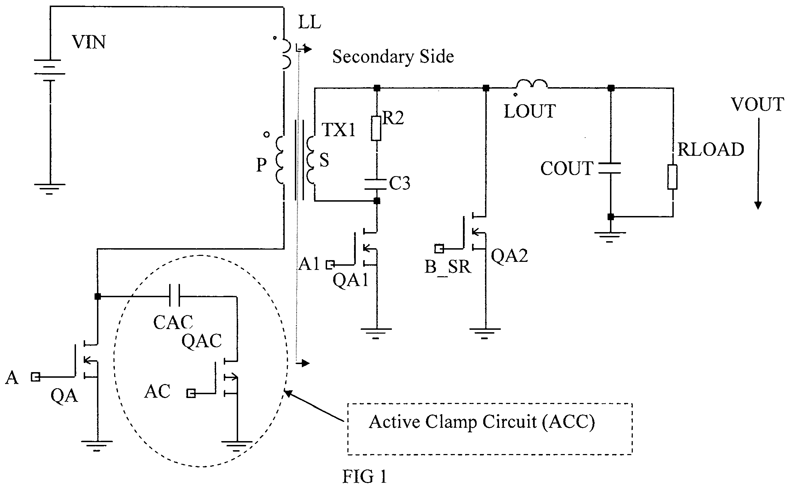

Figure 1 shows an example of a power converter according to prior art. The power converter in figure 1 comprises a primary side and a secondary side separated by a transformer TX1 having a primary winding on the primary side and a secondary winding on the secondary side. The primary and secondary sides are input and output circuits of the power converter, respectively. Further, the transformer TX1 has a leakage inductance LL.

Moreover, an Active Clamp Circuit (ACC) is connected to the primary side of the power converter as shown in figure 1. A primary switch QA is also connected to the primary side and is Pulsed Width Modulated (PWM) with a control signal A. The primary switch QA chops up the input voltage VIN so that the voltage at the input of the output filter (node LOUT, QA2) will be equal to VIN·NS/NP (NS/NP is the turns ratio of the transformer TX1 and is defined as number of secondary turns NS over number of primary turns NP) when the primary switch QA is turned on, and 0 V when the primary switch QA is turned off. Hence, the power converter converts the input voltage VIN to an output voltage VOUT.

The circuit in figure 1 further comprises synchronous rectifiers QA1 and QA2 connected to the secondary side, and a resistance R2 in series with a capacitance C3 which together form a lossy RC snubber that reduces voltage ringing on the secondary side of the power converter.

An inductance LOUT and a capacitance COUT form an averaging output filter of the power converter. By changing a duty cycle D of the control signal A, the output voltage VOUT can be regulated as VOUT = VIN·(NS/NP)·D. Finally, a resistance RLOAD is connected to the secondary side and is the output load resistor over which the output voltage VOUT can be found.

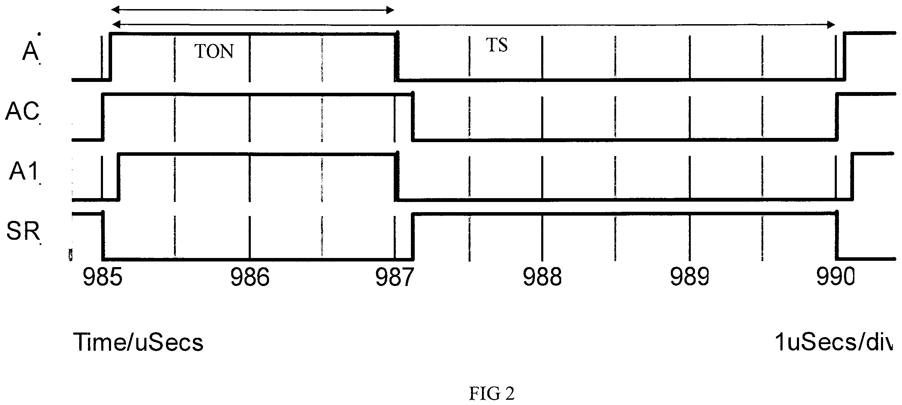

Figure 1 shows a control logic for an ACC in a power converter according to prior art, wherein fS = 1/TS is the switching frequency of the power converter and TS is the period time. The duty cycle D is defined as D = TON/TS, where TON is the time interval when the primary switch QA is turned on. In figure 2, QAC is turned on when the primary switch QA is turned off, and vice versa. It should however be noted that the ACC in this case is realised with a PMOS transistor which means that the ACC is turned on when the control signal for the ACC is set to low.

Furthermore, the above described types of power converters according to prior art are often employed as Switched Mode Power Supplies (SMPS). Unlike a linear power supply, the pass transistor of a SMPS switches very quickly between full-on and full-off states, typically between 50 kHz and 1 MHz, which minimizes wasted energy. Voltage regulation is provided by varying the ratio D. In contrast, a linear power supply must dissipate the excess voltage to regulate the output. This higher efficiency is the chief advantage of a SMPS.

A major goal when converting an input voltage to an output voltage in SMPS is to perform this power conversion with so small losses as possible. When a semiconductor switch in a high frequency SMPS is turned on and off, respectively, it is associated with a switching loss which adds to the total losses of the SMPS. Normally, the switch-off losses are dominant due to the trapezoidal current waveform thru the switch, i.e. the current is higher at turn-off. During turn-on, the leakage inductance of the transformer TX1 limits the derivate of the current, i.e. *di/dt*, making the turn-on losses smaller in this case.

Another issue is voltage transients generated from parasitic inductances in the transformer TX1 that occurs over the secondary side rectifiers which mainly are due to leakage inductance. These transients or voltage spikes forces the designer to use higher voltage rating on the semiconductors and lossy snubbers (a circuit that limits voltage spikes, often with significant additional loss), which contributes to higher losses in the power converter.

Document US 7,606,051 shows fully clamped coupled inductors in power conversion circuits.

"Adding Active Clamping and Soft Switching to Boost-Flyback Single-State Isolated Power-Factor-Corrected Power Supplies" (Yim-Shu Lee and Bo-Tao Lin, IEEE TRANSCTIONS ON POWER ELECTRONICS, vol. 12, No. 6, November 1997) discloses an active clamping being added to SSIPP (single-stage isolated power-factor-corrected power supplies) to recycle the energy trapped in the leakage inductance of the transformer and to achieve soft switching of the electronic devices (to further reduce loss). The arrangement significantly improves the viability of SSIPP for practical application. The auxiliary active-clamping transistor in the proposed circuit uses the same control/driver circuit as the main switching transistor. Further,

EP1209804A2 shows a switching power supply circuits. The power supply circuit has a so-called composite resonance type switching converter equipped with a primary resonance circuit for forming a voltage resonance type converter at a primary side and a secondary resonance circuit comprising a secondary winding and a secondary parallel resonance capacitor at a secondary side. The secondary side is equipped with active clamp means for stabilizing a DC output low voltage taken out from an inter-mediate of the secondary winding to control the conduction angle of an auxiliary main switching element in accordance with the level of the DC output low voltage, whereby the power loss due to the cross-regulation of the DC output low voltage can be reduced and the power conversion efficiency can be enhanced.

## Summary of the Invention

An object of the present invention is to provide a power converter which fully or in part solves the drawbacks and disadvantages of prior art power converters. Another object of the invention is to provide a power converter with reduced switching losses compared to prior art power converters. A yet another object of the invention is to provide an alternative solution to the problem of power conversion using a power converter.

According to one aspect of the invention, the objects are achieved with a power converter for DC/DC or AC/DC conversion, according to claim 1.

Embodiments of the power converter above are disclosed in the dependent claims 2-11.

According to another aspect of the invention the objects are achieved with a system comprising at least one power converter above and at least one control circuit arranged for controlling one or more switches in said power converter.

According to yet another aspect of the invention, the objects are also achieved with a method for controlling at least one active clamp circuit in a power converter, according to claim 13.

The method according to the invention may also be modified, *mutatis mutandis,* according to the different embodiment of the power converter above.

The invention also relates to a computer program and a computer program product when run in a computer causes the computer to execute the method. Also, the invention relates to a system.

One advantage with the present invention is the fact that it alters the shape of the current waveform, e.g. in primary switches and in secondary rectifiers, to be higher at turn-on and lower at turn-off, thereby reducing the dominant turn-off losses in a power converter according to the invention. Hence, the present invention provides more efficient power conversion compared to prior art power converters and may achieve efficiency > 96%.

Furthermore, the voltage stress on rectifiers on the secondary side is also reduced which means that lower voltage rating on the rectifiers on the secondary side may be used. Lower voltage rating over the rectifiers normally means lower resistance over the transistor when it is turned on in case of a synchronous rectifier or lower forward voltage drop in case of a diode rectifier. Hence higher efficiency can be achieved.

Other advantages and applications of the present invention will be apparent from the following disclosure.

## Brief Description of the Drawings

The appended drawings are intended to clarify and explain different embodiments of the present invention in which:

- Figure 1 shows an example of a power converter according to prior art;
- Figure 2 shows control logic for controlling an ACC according to prior art;
- Figure 3 schematically shows an ACC according to the present invention;

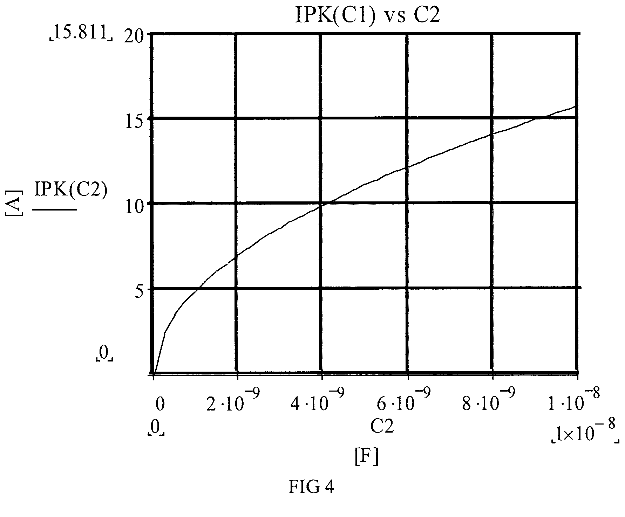

- Figure 4 shows the peak current thru the ACC in figure 3 versus a value C2 for the second capacitance C2;
- Figure 5 shows the voltage over the ACC in figure 3 and currents in the ACC during the time interval when the ACC is active;
- Figure 6 shows the current waveform thru L1 for two different values C2 on the second capacitance C2;
- Figure 7 shows an embodiment of a PC according to the present invention - a full bridge primary and a current doubler secondary with two ACCs;
- Figure 8 shows control logic waveforms for controlling all switches of the PC in figure 7;
- Figure 9 shows the current waveform and the instantaneous power in a primary switch in a circuit according to figure 7;
- Figure 10 shows in detail the graph in figure 9 at the time the switch is turned off;
- Figure 11 shows another embodiment of the present invention - a full bridge primary and a full bridge secondary with two ACCs;
- Figure 12 shows another embodiment of the present invention - an active clamp forward converter with two ACCs; and
- Figure 13 shows yet another embodiment of the present invention - a full bridge primary and a current doubler alt. 2 on the secondary with two ACCs;

**Detailed Description of Embodiments of the Invention**

An ACC according to prior art consists of a controllable switch S1 in series with a capacitor C1, and in parallel with the controllable switch S1 there is a diode D1. The diode D1 is oriented in such a way that it will automatically clamp the unipolar voltage spike to the voltage over the capacitor C1, and the capacitor C1 will resonate with the inductor LL which is in series with the primary winding of the transformer TX1.

Usually, the switch S1 is turned on shortly after that the diode D1 has started to conduct and it will be held on allowing the current in the capacitor C1 to resonate. Thus, the current in the capacitor C1 will initially charge and thereafter discharge the capacitor C1 to its initial value during one switching cycle. This configuration has proven efficient and it clamps the voltage on the primary side efficiently, however it does not solve the problem with voltage spikes on the secondary side.

Therefore, the present invention provides a Power Converter (PC) having a primary side and a secondary side separated by a transformer TX1. The primary side is connected to a primary winding of the transformer TX1 and is an input circuit of the PC. The secondary side is connected to a secondary winding of the TX1 and is an output circuit of the PC.

The PC according to the invention further comprises at least one ACC connected to the secondary side of the PC. The at least one ACC comprises: a first capacitor C1 connected in series with a parallel combination of a switch S1 and a diode D1, and a second capacitor C2 connected in parallel with the series combination of the first capacitor C1 and the parallel combination of the switch S1 and the diode D1.

This configuration of a PC results in lower switching losses and thereby higher efficiency, and eliminated voltage spikes over the secondary side rectifiers.

According to an embodiment of the invention, the ACC further comprises: a first node 1; 1 connected to the first capacitor C1 and to the second capacitor C2; a second node 2; 2' connected to the first capacitor C1, the switch S1 and to an anode of the diode D1; and a third node 3; 3' connected to the switch S1, a cathode of the diode D1 and to the second capacitor C2.

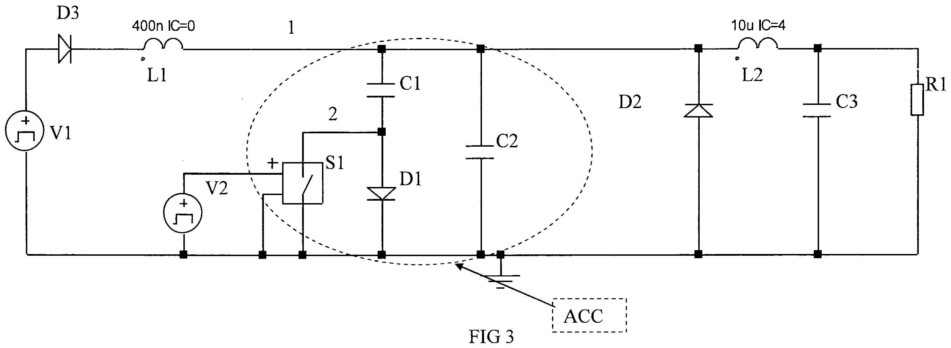

Figure 3 schematically shows the nodes 1, 2, 3 of an ACC according to the invention and with reference to said figure: the first node 1 is connected to a first node of said secondary winding of the transformer TX1 or to a high ohmic node, and the third node 3 is connected to a low ohmic node of the secondary side according to yet another embodiment of the invention.

A low ohmic node, also called AC-ground, is a node which is virtually fixed in voltage when current is sourced or sinked into the node in a time interval of interest. Ground is the ideal low ohmic node. A voltage source with one side connected to ground is an ideal low ohmic node at its other end. Also a big capacitor connected to ground will have the other node as AC-ground. A high ohmic node is the opposite of a low ohmic node. Injecting a current into such a node will make the voltage increase substantially during the time interval of interest Figure 3 shows a simplified schematic of a secondary side of a PC with an ACC according to the invention, and should be understood to be used to analyse the ACC during one switching cycle. It is assumed that the circuit in figure 3 has reached its stationary state.

The initial conditions in the circuit are set to correspond to the stationary state at the time voltage over the secondary side, here simplified to a voltage source V1 has reached 100 V, where V1 is the secondary side voltage. V2 has a turn-on delay relative V1 and is the voltage that controls the switch S1 of the ACC. Inductance L1 in this description is: a leakage inductance transformed to the secondary side, or the leakage inductance transformed to the secondary side plus at least one external inductance. The initial current thru L1=0 A. C1 is the first capacitor of the ACC having an initial voltage 100 V. Further, D3 is a secondary rectifier diode; D2 is the freewheel rectifier of the output stage; L2 is the output inductor, initial current=4 A; and C3 is the output capacitor, initial voltage=28 V.

The second capacitance C2 includes the output capacitance of the (synchronous) rectifier, and is an essential component for the correct functionality of the ACC and PC according to the invention; initial voltage over the second capacitance C2=0 V.

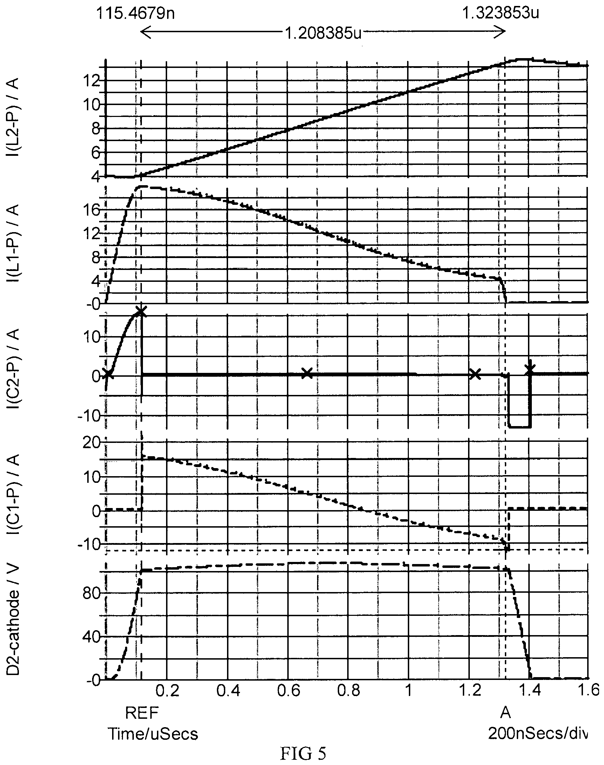

At t=0 the following holds: V1=100 V, $I_{L1}$=0 A, $V_{C2}$=0 V, $V_{C1}$=100 V, $I_{L2}$=4 A, $U_{C3}$=28 V, and current $I_{L2}$ is freewheeling thru D2. Figure 5 shows how $I_{L1}$ starts to ramp-up and support the output inductor L2 with current. When $I_{L1}$ has reached 4 A it will start to charge the second capacitor C2 of the ACC. As soon as $V_{C2}$ is above the forward voltage drop of D2, D2 will be reversed and $I_{L1}$ will supply current to $I_{L2}$ which initially is at 4 A. The Peak Current (PK) of $I_{C2}$ (i.e. $IPK_{c2}$) is set by the resonance circuit formed by the inductance L1 and the second capacitor C2. Since law of energy conservation applies: $C2 \cdot V1^2 = L1 \cdot IPK_{C2}^2$, and $V_{C2}$ will charge to 100 V. The inventors used the following values in the exemplary configuration above: $V1=100\ V$, $L1=400 \cdot 10^{-9}$H, $C2= 10 \cdot 10^{-9}$ F, $IPKc_2$=15.811 A, $IPK_{L1}=IPK_{C2} + I_{L2}$ where $IPK_{L1}$= 19.811 A and $I_{L2}$=4 A.

Further, as shown in figure 5, when the voltage V(C2) over the second capacitance C2 reach 100V D1 will start to conduct (t≈115 ns in figure 5). The previous peak current in second capacitor C2 will now charge the first capacitor C1 thru the inductance L1 ($IPK_{C1}=IPK_{C2}$).

After a small delay the switch S 1 of the ACC will be turned on and current is now allowed to flow in the opposite direction, i.e. the first capacitor C1 can be discharged to the output inductor L2. The first capacitance C1 and the inductance L1 now form a resonance circuit. When the "primary side" modelled by V1 is turned-off after 1.32 μs most of the current to the output inductor L2 is supported from the first capacitor C1, thereby reducing turn-off loss for the primary side switches and for secondary side rectifier here modelled by D3.

Finally, the turn-off of the ACC switch S1 can be done at almost Zero Voltage Switching (ZVS) as the second C2 capacitor will deliver current to the output inductor L2 and hold the voltage over the switch S1 at a low voltage during the turn-off. As can be seen in figure 5 I(L1)=I(L2)+I(C1)+I(C2), i.e. the ACC reduces the turn-off current of the primary side switches and the secondary side rectifier, thereby reducing turn-off loss significantly in the PC. ZVS means that the voltage over a switch is zero volt or close to zero during transition from one state to another, e.g. from open to closed state or vice versa.

*Dimensioning the ACC and PC*

During the time when the primary switch(es) QA; QB; QC; QD conduct, the ACC corresponding to the primary switch(es) QA; QB; QC; QD does also conduct. At this time the current ramps-up in the output inductor L2 with a constant slope equal to: *(VI-VOUT)/L2*. The peak current, $IPK_{L2}$, in the output inductor L2 is calculated using Eq. 1 below.

$$IPK_{L2} = IOUT + \frac{(V1 - VOUT)}{2 \cdot L2} \cdot TON , \qquad (1)$$

The inventors used the following values in an exemplary configuration: *V1=100 V, VOUT*=28 V *L2*=10·10⁻⁶, *IOUT*=8 A, VOUT=28 V, *TON*=1.32·10⁻⁶, which gives $IPK_{L2}$=12.752.

The first capacitor C1 and the inductance L1 form a resonant circuit with resonance frequency $f_R$ given by the relation in Eq. 2:

$$f_R = \frac{1}{2\pi\sqrt{L1 \cdot C1}}, \qquad (2)$$

The resonance frequency $f_R$ is chosen to ring a half cycle during *TON* for optimal performance. The current in the first capacitor C1 will then go from its maximum value at turn on to its minimum at turn-off. The resonance frequency $f_R$ is 0.5 - 4.0 times the switching frequency $f_s$ of the PC, and preferably 1.0 - 2.0 times the switching frequency $f_s$.

The value of the first capacitance is given by:

$$C1 = \frac{1}{(2 \cdot \pi \cdot f_R)^2 L1}, \qquad (3)$$

The inventors used the following values in an exemplary configuration: *L1*=400·10⁻⁹, $f_R$=1/*TON*=3.788·10⁵, *VOUT*=28 V, *TON*=1.32·10⁻⁶, which gives *C1*=4.414·10⁻⁷.

To achieve Zero Current Switching (ZCS) at turn-off for the primary switches and the secondary rectifier, the first capacitor C1 has to deliver all output current to the output inductor L2 at turn-off, i.e. the peak current thru the first capacitor C1 equals the peak current thru output inductor L2, $IPK_{C1}=IPK_{L2}$. ZCS means that when the current thru a switch is zero ampere or close to zero ampere during transition from one state to another, e.g. from open to closed state or vice versa.

The following relation has been proved to hold:

$$IPK_{C1} = V1 \cdot \sqrt{\frac{C2}{L1}}, \qquad (4)$$

The inventors used the following values in an exemplary configuration: *L1*=400·10⁻⁹, *V1*=100 V, *C2* = ((*IPK_{C1}*)²·*L1*)/*V1²*=6.503·10⁻⁹, which gives $IPK_{C1}$=12.75 A.

From above, the dimensioning of an ACC according to an embodiment of the invention can be summarised as:

- Find a peak current in the output inductor L2 from Eq. 1
- Choose a value C2 for the second capacitance C2 from Eq. 4 so that the relation $IPK_{C1} = IPK_{L2}$ holds; and
- Choose a value *C1* for the first capacitor C1 from Eq. 2 so that the current in first capacitor C1 resonates one half period during the time the current flows in the first capacitor C1. This time $TON=D \cdot TS$ is the same as the ramp-up time in the output inductor L2.

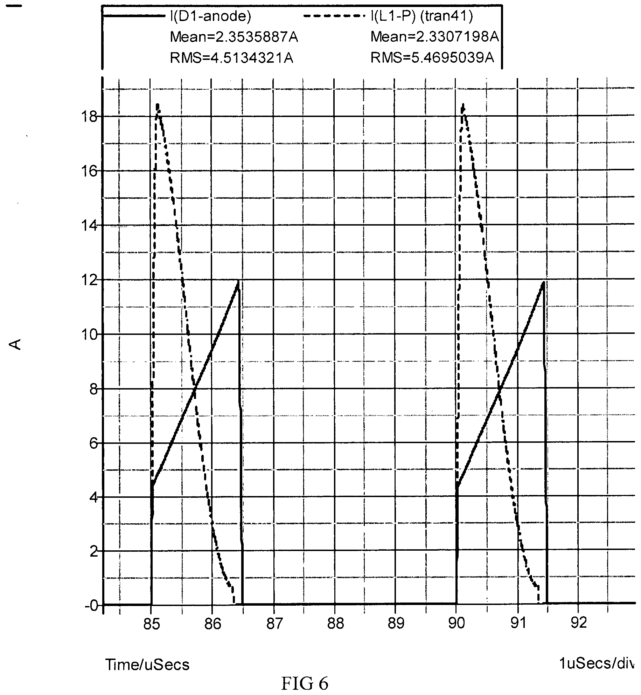

Figure 6 shows the effects of different values C2 for the second capacitor C2 on the shape of the current thru inductance L1. The undotted curve shows when C2=100 pF and the dotted curve shows when $C2=10$ nF. By increasing the value of C2 of the second capacitor C2, the shape of the current I(L1) thru the inductance is changed in such away that it is lower at turn-off. In its extreme, as shown in the figure 6 for $C2=10$ nF, ZCS at turn-off is achieved.

*Further embodiments and effects*

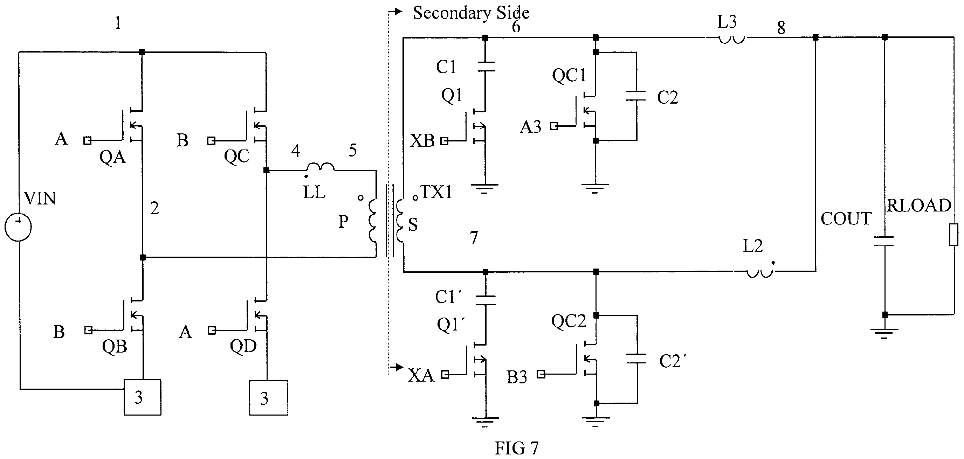

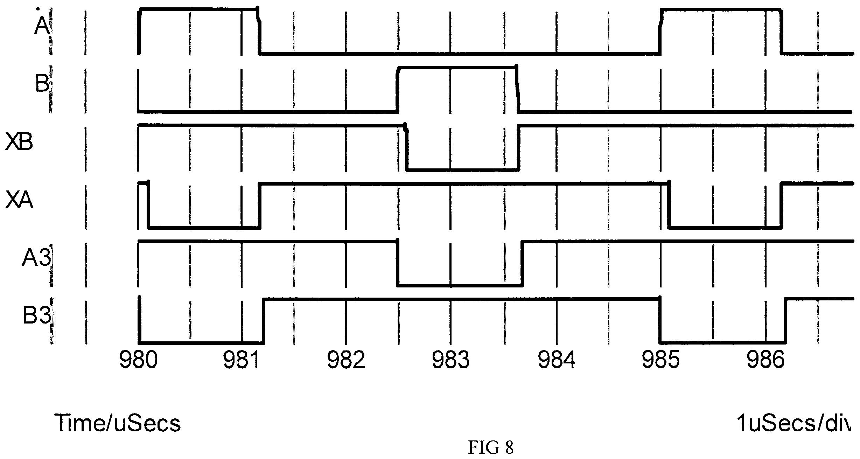

Figure 7 shows the schematic of ACC in a current doubler configuration having two ACCs connected to the secondary side of the PC. The first ACC is formed by a first capacitor C1 together with a second capacitor C2 of the first ACC; while the second ACC is formed by a first capacitor C1' together with Q1' and a second capacitor C2' of the second ACC. The capacitors C2 and C2' can be considered as lumped capacitors including the parasitic capacitance of the transformer TX1 and the output capacitance of the Mosfets. Figure 8 shows the timing diagram of control logic for the current doubler, and since control signals A, B, A3 and B3 control NMOS transistors, these transistors are turned on when their control signal are high. It should be noted that the ACC switches Q1 and Q1' are PMOS transistors in this implementation. Thus they are turned on when their control signals XA and XB are set to low. As can be seen from figure 8, control signal A drives QA and QD, while control signal B drives QB and QC. The secondary rectifiers are controlled by control signals A3 and B3. Further, the ACCs are controlled by control signals XA and XB.

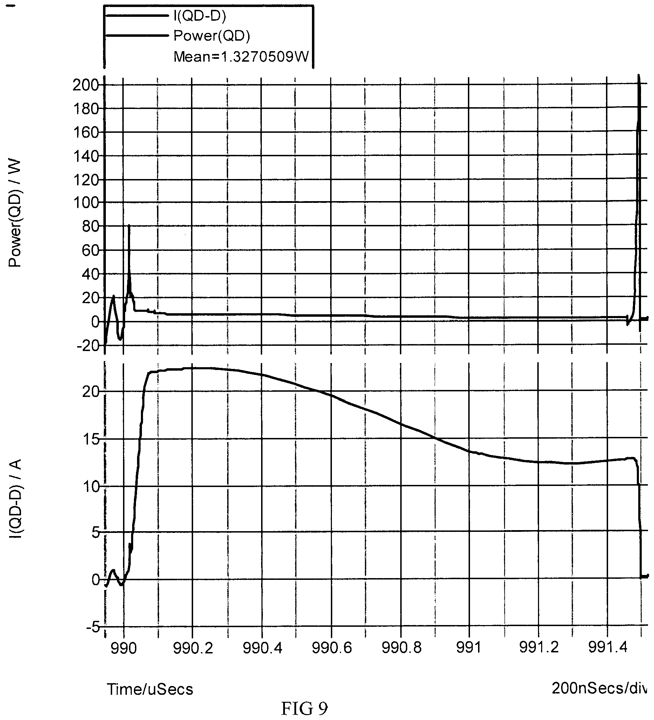

Figure 9 shows the waveforms in a PC having ACCs according to the invention connected to the secondary side. The upper curve in figure 9 shows instantaneous power in one of the primary switches QD, while the lower curve shows current thru QD. It should be noted that the dominant turn-off loss is reduced due to the lower turn-off current with the ACC. Further, the average power loss has dropped from 2.4 W down to 1.33 W.

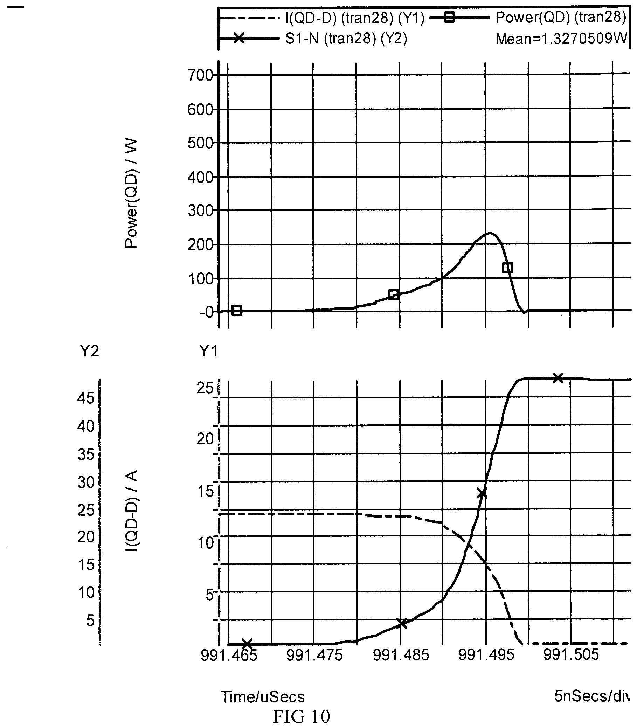

Figure 10 shows zoomed in turn-off losses of figure 9 on a primary MOSFET in a PC having ACCs according to the invention connected to the secondary side (see figure 7).

*Topologies*

The present invention is applicable to all transformer based topologies due to the inherent leakage inductance of transformers TX1s, such as current doubler, fullbridge, forward, and flyback topologies. However, the present invention is also applicable to none transformer based topologies like the Buck converter that has a structure similar to the structure in figure 3.

According to an embodiment of the invention, the following topologies comprise a first and a second ACC, wherein each of the first nodes of the ACCs are connected to different nodes of the secondary winding of the transformer TX1. Preferably, the third node of the ACC are at the same time connected to a low ohmic node. This common configuration for the different topologies has shown good results in tests by the inventors.

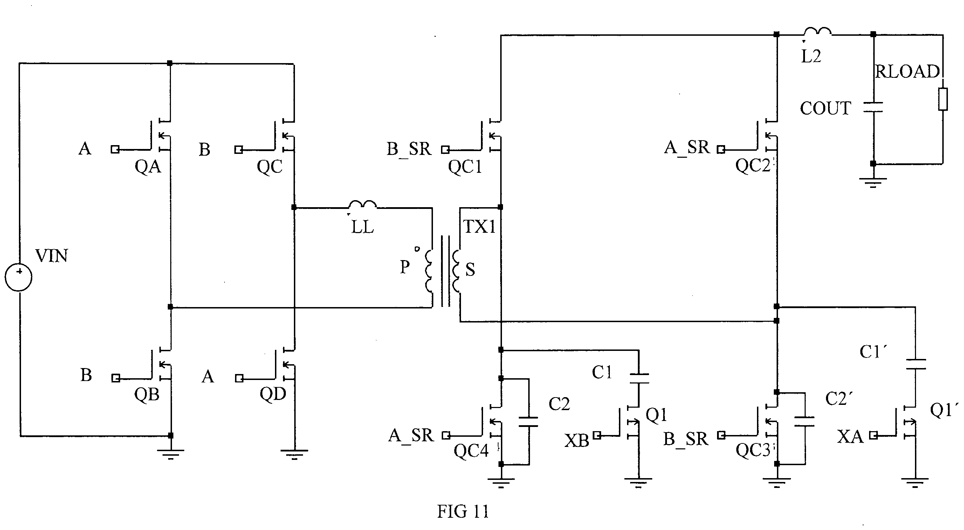

Figure 11 schematically shows ACCs in a fullbridge configuration. The first ACC is formed by a first capacitor C1 together with Q1 and a second capacitor C2 of the first ACC. The second ACC is formed by a first capacitance C1' together with a Q1' and a second capacitor C2' of the second ACC. Capacitors C2 and C2' can be considered as lumped capacitors including the parasitic capacitance of the transformer TX1 and the output capacitance of the Mosfets.

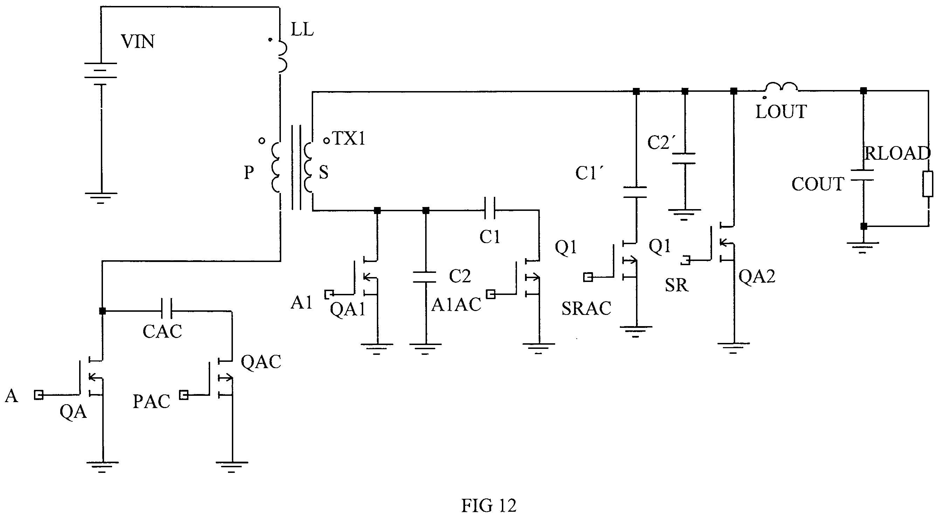

Figure 12 schematically shows ACCs in an Active Clamp Forward Converter (ACF) configuration. The first ACC is formed by a first capacitor C1 together with Q1 and a second capacitor C2 of the first ACC. The second ACC is formed by a first capacitor C1' together with a Q1' and a second capacitor C2'of the second ACC. Capacitors C1 and C2 can be considered as lumped capacitors including the parasitic capacitance of the transformer TX1 and the output capacitance of the Mosfets.

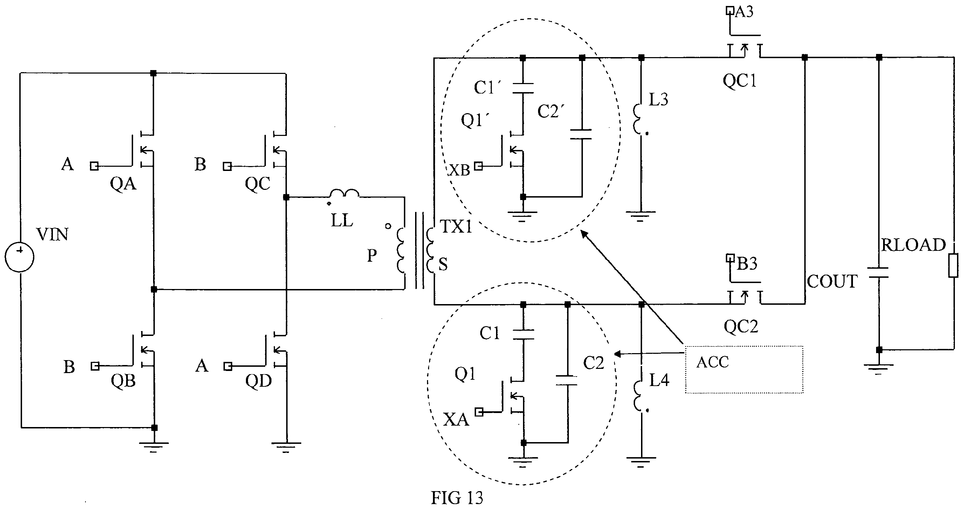

Figure 13 schematically shows an alternative current doubler configuration. It should be noted that the ACCs in this configuration are NMOS transistors and are therefore controlled by positive logic, see below.

The timing diagrams for the control signals for the different topologies follow the same principle as explained above in connection with the timing diagram in figure 8.

Furthermore, the present invention also relates to a system comprising at least one power converter PC according to any of the embodiments above and at least one control circuit arranged for controlling one or more switches in the power converter PC.

The invention further relates to a method for controlling at least one ACC in a PC, the PC comprises at least one ACC connected to the secondary side and at least one corresponding primary switch QA; QB; QC; QD connected to the primary side. The at least one ACC is arranged to alter a shape of a current waveform in the at least one corresponding primary switch QA; QB; QC; QD so that the current waveform is higher when said corresponding primary switch QA; QB; QC; QD is turned on than when the corresponding primary switch QA; QB; QC; QD is turned off. According to the present method: the at least one ACC is turned on and off substantially at the same time as when the at least one corresponding primary switch QA; QB; QC; QD is turned on and off.

According to an embodiment of the method above, the at least one ACC is turned on and off with a delay $d$ when the at least one corresponding primary switch QA; QB; QC; QD is turned on and off, which has been described above.

According to yet another embodiment of the method, the delay d is less than the time interval $TON$ when the at least one corresponding primary switch QA; QB; QC; QD is turned on, and preferably less than one tenth *of TON,* i.e. $d<TON/10$.

Furthermore, as understood by the person skilled in the art, a method according to the present invention may be implemented in a computer program, having code means, which when run in a computer causes the computer to execute the steps of the method. The computer program is included in a computer readable medium of a computer program product. The computer readable medium may consist of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Finally, it should be understood that the present invention is not limited to the above described embodiments but incorporates all embodiments within the scoop of the appended independent claims.

**Claims**

1. Power converter for DC/DC or AC/DC conversion, said power converter (PC) having a primary side and a secondary side separated by a transformer (TX1), said primary side being connected to a primary winding of said transformer (TX1) and being an input circuit of said power converter, and said secondary side being connected to a secondary winding of said transformer (TX1) and being an output circuit of said power converter (PC), said power converter (PC) further comprising at least one active clamp circuit (ACC) connected to said secondary side; wherein said at least one active clamp circuit (ACC) comprises:

   - a first capacitor (C1) connected in series with a parallel combination of a switch (S1) and a diode (D1), and
   - a second capacitor (C2) connected in parallel with said series combination of said first capacitor (C1) and said parallel combination of said switch (S1) and said diode (D1),
   - a first node (1) being connected to said first capacitor (C1) and to said second capacitor (C2),
   - a second node (2) being connected to said first capacitor (C1), said switch (S1) and to an anode of said diode (D1), and
   - a third node (3) being connected to said switch (S1), a cathode of said diode (D1) and to said second capacitor (C2);

   **characterized in that** the current of an inductance (L1) being connected in series with said secondary winding charges said second capacitor (C2) and a previous peak current in said second capacitor (C2) charges said first capacitor (C1) through the inductance; said first node (1) is connected to a first node of said secondary winding and said third node (3) is connected to a low ohmic node of said secondary side;

   said power converter (PC) further comprises multiple primary switches (QA; QB; QC; QD) connected to said primary side, wherein said multiple primary switches (QA; QB; QC; QD) are switches corresponding to said at least one active clamp circuit (ACC), and said switch (S1) comprised in at least one active clamp circuit (ACC) is arranged to be turned on and off at the same time as when at least one corresponding primary switch of said multiple primary switches (QA; QB; QC; QD) is turned on and off.

2. The power converter according to claim 1, comprising a first (ACC1) and a second active clamp circuit (ACC2), wherein:

   - a first node (1) of said first active clamp circuit (ACC1) is connected to a first node of said secondary winding, and
   - a first node of said second active clamp circuit (ACC2) is connected to a second node of said secondary winding.

3. The power converter according to claim 2, wherein:

   - a third node (3) of said first active clamp circuit (ACC1) is connected to a low ohmic node of said secondary side, and
   - a third node of said second clamp circuit (ACC2) is connected to a low ohmic node of said secondary side.

4. The power converter according to claim 3, wherein said power converter (PC) is arranged as a current doubler, fullbridge or a forward topology.

5. The power converter according to claim 1, wherein said inductance ($L1$) is a leakage inductance of the transformer or a leakage inductance of the transformer plus at least one external inductance.

6. The power converter according to claim 5, wherein said first capacitor (C1) and said inductance ($L1$) form a resonant circuit with a resonance frequency $f_R = \dfrac{1}{2\pi\sqrt{L1 \cdot C1}}$, where C1 is a value of said first capacitance (C1).

7. The power converter according to claim 6, wherein said resonance frequency $f_R$ is 0.5 - 4.0 times a switching frequency $f_s$ of said power converter (PC), and preferably 1.0 - 2.0 times said switching frequency $f_s$.

8. The power converter according to claim 5, wherein a value $C2$ of said second capacitance (C2) is dependent on said inductance ($L1$), a peak current $IPK_{C1}$ in said first capacitance (C1), and a voltage $V1$ defined as a input voltage of said power converter (PC) times a turn ratio of said transformer (TX1).

9. The power converter according to claim 8, wherein said value C2 of said second capacitance (C2) is given by the

$$C2 = \frac{IPK_{C1}^2 \cdot L1}{V1^2} \,.$$

10. The power converter according to claim 1, wherein said parallel combination of said switch (S1) and said diode (D1) is a PMOS or a NMOS transistor.

11. The power converter according to claim 1, wherein said switch (S1) is a bipolar transistor or an IGBT transistor.

12. A system comprising at least one power converter (PC) according to any of the preceding claims 1 to 11 and at least one control circuit arranged for controlling one or more switches in said power converter (PC).

13. Method for controlling at least one active clamp circuit (ACC) in a power converter (PC), said power converter (PC) having a primary side and a secondary side separated by a transformer (TX1);

- said primary side being connected to a primary winding of said transformer (TX1) and being an input circuit of said power converter (PC), and said secondary side being connected to a secondary winding of said transformer (TX1) and being an output circuit of said power converter (PC);
- said power converter (PC) further comprising at least one active clamp circuit (ACC) connected to said secondary side and multiple primary switches (QA; QB; QC; QD) connected to said primary side, wherein said at least one active clamp circuit (ACC) is arranged to alter a shape of a current waveform in at least one corresponding primary switch of said multiple primary switches (QA; QB; QC; QD) so that said current waveform is higher when said at least one corresponding primary switch (QA; QB; QC; QD) is turned on than when said at least corresponding primary switch (QA; QB; QC; QD) is turned off; **characterised in that**:

- said at least one active clamp circuit (ACC) is configured to be turned on and off at the same time as when said at least one corresponding primary switch (QA; QB; QC; QD) is turned on and off,

said at least one active clamp circuit (ACC) comprises:

- a first capacitor (C1) connected in series with a parallel combination of a switch (S1) and a diode (D1), and
- a second capacitor (C2) connected in parallel with said series combination of said first capacitor (C1) and said parallel combination of said switch (S1) and said diode (D1), wherein the current of an inductance ($L1$) being connected in series with said secondary winding is configured to charge said second capacitor (C2) and a previous peak current in said second capacitor (C2) is configured to charge said first capacitor (C1) through the inductance *(L1)*.

**Patentansprüche**

1. Stromwandler zur DC/DC- oder AC/DC-Umwandlung, wobei der Stromwandler (PC) eine Primärseite und eine Sekundärseite aufweist, die durch einen Transformator (TX1) getrennt sind, wobei die Primärseite mit einer Primärwicklung des Transformators (TX1) verbunden ist und einer Eingangsschaltung des Stromwandlers entspricht, und die Sekundärseite mit einer Sekundärwicklung des Transformators (TX1) verbunden ist und einer Ausgangsschaltung des Stromwandlers (PC) entspricht, wobei der Stromwandler (PC) ferner mindestens eine aktive Klemmschaltung (ACC) umfasst, die mit der Sekundärseite verbunden ist; wobei die mindestens eine aktive Klemmschaltung (ACC) Folgendes umfasst:

   - einen ersten Kondensator (C1), der mit einer Parallelschaltung eines Schalters (S1) und einer Diode (D1) in Reihe geschaltet ist, und
   - einen zweiten Kondensator (C2), der mit der Reihenschaltung des ersten Kondensators (C1) und der Parallelschaltung des Schalters (S1) und der Diode (D1) parallel geschaltet ist,
   - einen ersten Knoten (1), der mit dem ersten Kondensator (C1) und mit dem zweiten Kondensator (C2) verbunden ist,
   - einen zweiten Knoten (2), der mit dem ersten Kondensator (C1), dem Schalter (S1) und einer Anode der Diode (D1) verbunden ist, und
   - einen dritten Knoten (3), der mit dem Schalter (S1), einer Kathode der Diode (D1) und dem zweiten Kondensator (C2) verbunden ist;

   **dadurch gekennzeichnet, dass** der Strom einer Induktivität (L1), die mit der Sekundärwicklung in Reihe geschaltet ist, den zweiten Kondensator (C2) auflädt und ein vorheriger Spitzenstrom in dem zweiten Kondensator (C2) den ersten Kondensator (C1) durch die Induktivität auflädt;
   der erste Knoten (1) mit einem ersten Knoten der Sekundärwicklung verbunden ist und der dritte Knoten (3) mit einem niederohmigen Knoten der Sekundärseite verbunden ist;
   der Stromwandler (PC) ferner mehrere primäre Schalter (QA; QB; QC; QD) umfasst, die mit der Primärseite verbunden sind, wobei die mehreren primären Schalter (QA; QB; QC; QD) Schalter sind, die der mindestens einen aktiven Klemmschaltung (ACC) entsprechen, und der Schalter (S1), der in mindestens einer aktiven Klemmschaltung (ACC) enthalten ist, angeordnet ist, um zur gleichen Zeit ein- und ausgeschaltet zu werden, wie wenn mindestens ein entsprechender primärer Schalter der mehreren primären Schalter (QA; QB; QC; QD) ein- und ausgeschaltet wird.

2. Stromwandler nach Anspruch 1, umfassend eine erste (ACC1) und eine zweite aktive Klemmschaltung (ACC2), wobei:

   - ein erster Knoten (1) der ersten aktiven Klemmschaltung (ACC1) mit einem ersten Knoten der Sekundärwicklung verbunden ist, und
   - ein erster Knoten der zweiten aktiven Klemmschaltung (ACC2) mit einem zweiten Knoten der Sekundärwicklung verbunden ist.

3. Stromwandler nach Anspruch 2, wobei:

   - ein dritter Knoten (3) der ersten aktiven Klemmschaltung (ACC1) mit einem niederohmigen Knoten der Sekundärseite verbunden ist, und
   - ein dritter Knoten der zweiten Klemmschaltung (ACC2) mit einem niederohmigen Knoten der Sekundärseite verbunden ist.

4. Stromwandler nach Anspruch 3, wobei der Stromwandler (PC) als ein Stromverdoppler, eine Vollbrücke oder eine Vorwärtstopologie angeordnet ist.

5. Stromwandler nach Anspruch 1, wobei die Induktivität (L1) eine Streuinduktivität des Transformators oder eine Streuinduktivität des Transformators plus mindestens eine externe Induktivität ist.

6. Stromwandler nach Anspruch 5, wobei der erste Kondensator (C1) und die Induktivität (L1) eine Resonanzschaltung mit einer Resonanzfrequenz $f_R = \dfrac{1}{2\pi\sqrt{L1 \cdot C1}}$, bilden, wobei C1 ein Wert der ersten Kapazität (C1) ist.

**7.** Stromwandler nach Anspruch 6, wobei die Resonanzfrequenz $f_R$ dem 0,5-4,0-Fachen einer Schaltfrequenz $f_s$ des Stromwandlers (PC), und vorzugsweise dem 1,0-2,0-Fachen der Schaltfrequenz $f_s$ entspricht.

**8.** Stromwandler nach Anspruch 5, wobei ein Wert $C2$ der zweiten Kapazität (C2) von der Induktivität ($L1$), einem Spitzenstrom $IPK_{C1}$ in der ersten Kapazität (C1), und einer Spannung $V1$ abhängt, die als eine Eingangsspannung des Stromwandlers (PC) mal ein Windungsverhältnis des Transformators (TX1) definiert ist.

**9.** Stromwandler nach Anspruch 8, wobei der Wert $C2$ der zweiten Kapazität (C2) durch die Beziehung:

$$C2 = \frac{IPK_{C1}^2 \cdot L1}{V1^2}$$ gegeben ist.

**10.** Stromwandler nach Anspruch 1, wobei es sich bei der Parallelschaltung des Schalters (S1) und der Diode (D1) um einen PMOS- oder einen NMOS-Transistor handelt.

**11.** Stromwandler nach Anspruch 1, wobei der Schalter (S1) ein Bipolartransistor oder ein IGBT-Transistor ist.

**12.** System, umfassend mindestens einen Stromwandler (PC) nach einem der vorhergehenden Ansprüche 1 bis 11 und mindestens eine Steuerschaltung, die zum Steuern von einem oder mehreren Schaltern in dem Stromwandler (PC) angeordnet ist.

**13.** Verfahren zum Steuern von mindestens einer aktiven Klemmschaltung (ACC) in einem Stromwandler (PC), wobei der Stromwandler (PC) eine Primärseite und eine Sekundärseite aufweist, die durch einen Transformator (TX1) getrennt sind;

- wobei die Primärseite mit einer Primärwicklung des Transformators (TX1) verbunden ist und einer Eingangsschaltung des Stromwandlers (PC) entspricht, und die Sekundärseite mit einer Sekundärwicklung des Transformators (TX1) verbunden ist und einer Ausgangsschaltung des Stromwandlers (PC) entspricht;
- wobei der Stromwandler (PC) ferner mindestens eine aktive Klemmschaltung (ACC), die mit der Sekundärseite verbunden ist und mehrere primäre Schalter (QA; QB; QC; QD) umfasst, die mit der Primärseite verbunden sind, wobei die mindestens eine aktive Klemmschaltung (ACC) angeordnet ist, um eine Form einer Stromwellenform in mindestens einem entsprechenden primären Schalter der mehreren primären Schalter (QA; QB; QC; QD) zu ändern, sodass die Stromwellenform höher ist, wenn der mindestens eine entsprechende primäre Schalter (QA; QB; QC; QD) eingeschaltet ist als wenn der mindestens eine entsprechende primäre Schalter (QA; QB; QC; QD) ausgeschaltet ist; **dadurch gekennzeichnet, dass**:

- die mindestens eine aktive Klemmschaltung (ACC) konfiguriert ist, um zur gleichen Zeit ein- und ausgeschaltet zu werden, wie wenn mindestens ein entsprechender primärer Schalter (QA; QB; QC; QD) ein- und ausgeschaltet wird,

wobei die mindestens eine aktive Klemmschaltung (ACC) ferner Folgendes umfasst:

- einen ersten Kondensator (C1), der in Reihe mit einer Parallelschaltung eines Schalters (S1) und einer Diode (D1) geschaltet ist, und
- einen zweiten Kondensator (C2), der mit der Reihenschaltung des ersten Kondensators (C1) und der Parallelschaltung des Schalters (S1) und der Diode (D1) parallel geschaltet ist, wobei der Strom einer Induktivität (L1), die mit der Sekundärwicklung in Reihe geschaltet ist, konfiguriert ist, um den zweiten Kondensator (C2) aufzuladen und ein vorheriger Spitzenstrom in dem zweiten Kondensator (C2) konfiguriert ist, um den ersten Kondensator (C1) durch die Induktivität ($L1$) aufzuladen.

## Revendications

**1.** Convertisseur électrique pour conversion CC/CC ou CA/CC, ledit convertisseur électrique (PC) ayant un côté primaire et un côté secondaire séparés par un transformateur (TX1), ledit côté primaire étant connecté à un bobinage primaire dudit transformateur (TX1) et étant un circuit d'entrée dudit convertisseur électrique, et ledit côté secondaire étant connecté à un bobinage secondaire dudit transformateur (TX1) et étant un circuit de sortie dudit convertisseur électrique (PC), ledit convertisseur électrique (PC) comprenant en outre au moins un circuit actif d'écrêtage (ACC) connecté audit côté secondaire ; dans lequel ledit au moins un circuit actif d'écrêtage (ACC) comprend :

- un premier condensateur (C1) connecté en série à une combinaison parallèle d'un commutateur (S1) et d'une diode (D1), et
- un second condensateur (C2) connecté en parallèle à ladite combinaison série dudit premier condensateur (C1) et de ladite combinaison parallèle dudit commutateur (S1) et de ladite diode (DI),
- un premier nœud (1) étant connecté audit premier condensateur (C1) et audit second condensateur (C2),
- un deuxième nœud (2) étant connecté audit premier condensateur (C1), audit commutateur (S1) et à une anode de ladite diode (D1), et
- un troisième nœud (3) étant connecté audit commutateur (S1), à une cathode de ladite diode (D1) et audit second condensateur (C2) ;

**caractérisé en ce que** le courant d'une inductance (L1) connectée en série audit bobinage secondaire charge ledit second condensateur (C2) et un courant de crête précédent dans ledit second condensateur (C2) charge ledit premier condensateur (C1) par le biais de l'inductance ;
ledit premier nœud (1) est connecté à un premier nœud dudit bobinage secondaire et ledit troisième nœud (3) est connecté à un nœud ohmique faible dudit côté secondaire ;
ledit convertisseur électrique (PC) comprend en outre de multiples commutateurs primaires (QA ; QB ; QC ; QD) connectés audit côté primaire, dans lequel lesdits multiples commutateurs primaires (QA ; QB ; QC ; QD) sont des commutateurs correspondant audit au moins un circuit actif d'écrêtage (ACC), et ledit commutateur (S1) compris dans au moins un circuit actif d'écrêtage (ACC) est agencé pour être activé et désactivé en même temps qu'au moins un commutateur primaire correspondant desdits multiples commutateurs primaires (QA ; QB ; QC ; QD) est activé et désactivé.

2. Convertisseur électrique selon la revendication 1, comprenant un premier (ACC1) et un second (ACC2) circuit actif d'écrêtage, dans lequel :

- un premier nœud (1) dudit premier circuit actif d'écrêtage (ACC1) est connecté à un premier nœud dudit bobinage secondaire, et
- un premier nœud dudit second circuit actif d'écrêtage (ACC2) est connecté à un second nœud dudit bobinage secondaire.

3. Convertisseur électrique selon la revendication 2, dans lequel :

- un troisième nœud (3) dudit premier circuit actif d'écrêtage (ACC1) est connecté à un nœud ohmique faible dudit côté secondaire, et
- un troisième nœud dudit second circuit actif d'écrêtage (ACC2) est connecté à un nœud ohmique faible dudit côté secondaire.

4. Convertisseur électrique selon la revendication 3, dans lequel ledit convertisseur électrique (PC) est agencé en tant que doubleur de courant, pont intégral ou topologie directe.

5. Convertisseur électrique selon la revendication 1, dans lequel ladite inductance ($L$1) est une inductance de fuite du transformateur ou une inductance de fuite du transformateur plus au moins une inductance externe.

6. Convertisseur électrique selon la revendication 5, dans lequel le premier condensateur (C1) et ladite inductance ($L$1) forment un circuit résonant avec une fréquence de résonance $f_R = \dfrac{1}{2\pi\sqrt{L1 \cdot C1}}$, où $C$1 est une valeur de ladite première capacité (C1)

7. Convertisseur électrique selon la revendication 6, dans lequel ladite fréquence de résonance $f_R$ fait 0,5 à 4,0 fois une fréquence de commutation $f_S$ dudit convertisseur électrique (PC), et de préférence 1,0 à 2,0 fois ladite fréquence de commutation $f$s.

8. Convertisseur électrique selon la revendication 5, dans lequel une valeur C2 de ladite seconde capacité (C2) dépend de ladite inductance ($L$1), d'un courant de crête $IPK_{C1}$ dans ladite première capacité (C1) et d'une tension $V1$ définie comme tension d'entrée dudit convertisseur électrique (PC) fois un rapport de tour dudit transformateur (TX1).

9. Convertisseur électrique selon la revendication 8, dans lequel ladite valeur C2 de ladite seconde capacité (C2) est donnée par la relation : $C2 = \dfrac{IPK_{C1}^2 \cdot L1}{V1^2}$ .

10. Convertisseur électrique selon la revendication 1, dans lequel ladite combinaison parallèle dudit commutateur (S1) et de ladite diode (D1) est un transistor PMOS ou NMOS.

11. Convertisseur électrique selon la revendication 1, dans lequel ledit commutateur (S1) est un transistor bipolaire ou un transistor IGBT.

12. Système comprenant au moins un convertisseur électrique (PC) selon l'une quelconque des revendications précédentes 1 à 11 et au moins un circuit de commande agencé pour commander un ou plusieurs commutateurs dans ledit convertisseur électrique (PC).

13. Procédé pour commander au moins un circuit actif d'écrêtage (ACC) dans un convertisseur électrique (PC), ledit convertisseur électrique (PC) ayant un côté primaire et un côté secondaire séparés par un transformateur (TX1) ;

    - ledit côté primaire étant connecté à un bobinage primaire dudit transformateur (TX1) et étant un circuit d'entrée dudit convertisseur électrique (PC), et ledit côté secondaire étant connecté à un bobinage secondaire dudit transformateur (TX1) et étant un circuit de sortie dudit convertisseur électrique (PC) ;
    - ledit convertisseur électrique (PC) comprenant en outre au moins un circuit actif d'écrêtage (ACC) connecté audit côté secondaire et de multiples commutateurs primaires (QA ; QB ; QC ; QD) connectés audit côté primaire, dans lequel ledit au moins un circuit actif d'écrêtage (ACC) est agencé pour modifier une forme d'une forme d'onde de courant dans au moins un commutateur primaire correspondant desdits multiples commutateurs primaires (QA ; QB ; QC ; QD) de telle sorte que ladite forme d'onde de courant est plus élevée lorsque ledit au moins un commutateur primaire correspondant (QA ; QB ; QC ; QD) est activé que lorsque ledit au moins un commutateur primaire correspondant (QA ; QB ; QC ; QD) est désactivé ;

    **caractérisé en ce que** :

    - ledit au moins un circuit actif d'écrêtage (ACC) est configuré pour être activé et désactivé en même temps que ledit au moins un commutateur primaire correspondant (QA ; QB ; QC ; QD) est activé et désactivé,

    ledit au moins un circuit actif d'écrêtage (ACC) comprend :

    - un premier condensateur (C1) connecté en série à une combinaison parallèle d'un commutateur (S1) et d'une diode (D1), et
    - un second condensateur (C2) connecté en parallèle à ladite combinaison série dudit premier condensateur (C1) et de ladite combinaison parallèle dudit commutateur (S1) et de ladite diode (D1), dans lequel le courant d'une inductance (*L*1) connectée en série audit bobinage secondaire est configuré pour charger ledit second condensateur (C2) et un courant de crête précédent dans ledit second condensateur (C2) est configuré pour charger ledit premier condensateur (C1) par le biais de l'inductance (*L1*).

FIG 1

EP 2 532 083 B1

FIG 2

EP 2 532 083 B1

FIG 3

D3

400n IC=0

1

L1

V1

V2

+

S1

2

C1

D1

C2

D2

10u IC=4

L2

C3

R1

ACC

EP 2 532 083 B1

15

FIG 4

FIG 5

FIG 6

FIG 7

Time/uSecs                                           1uSecs/div

FIG 8

EP 2 532 083 B1

FIG 9

FIG 10

FIG 11

FIG 12

FIG 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7606051 B

- EP 1209804 A2

### Non-patent literature cited in the description

- **YIM-SHU LEE ; BO-TAO LIN.** Adding Active Clamping and Soft Switching to Boost-Flyback Single-State Isolated Power-Factor-Corrected Power Supplies. *IEEE TRANSCTIONS ON POWER ELECTRONICS,* November 1997, vol. 12 (6